# EUROPEAN PATENT APPLICATION

(11) **EP 4 524 172 A1**
(43) Date of publication of application: **19.03.2025**
(21) Application number: 23196783.7
(22) Date of filing: 12.09.2023
(51) Int. Cl.: C08G 18/16, C08G 18/28, C08G 18/40, C08G 18/42, C08G 18/76, C08J 9/12

(54) **PIR AND PUR-PIR POLYOL COMPOSITION**

(71) Applicant: PCC ROKITA Spolka Akcyjna, 56-120 Brzeg Dolny (PL)
(72) Inventor: Zarzycka, Karolina, 56-120 Brzeg Dolny (PL); Szoldra, Pawel, 51-180 Wroclaw (PL); Halamus, Tomasz, 50-120 Wroclaw (PL)

(57) **Abstract**

The invention concerns polyol composition, comprising A. a polyester polyol with an aromatic polyester backbone, wherein the aromatic polyester polyol is an catalyst-mediated esterification reaction product at least of: a polyfunctional alcohol; an aromatic polycarboxylic acid component or polycarboxylic acid anhydride component or mixture thereof; and B. a mixture of at least two polymers polyether polyols, having a block structure of alkoxy chain, preferably being a block copolymer of polyethylene oxide and polypropylene oxide, more preferably OH monofunctional block copolymer of polyethylene oxide and polypropylene oxide initiated with hydroxyl alcohol C12-C14 and C16-C18, wherein a first polyether polyol has high number average molecular weight (high-Mn component) and a second polyether polyol has low number average molecular weight (low-Mn component) such that: (i) mass ratio of high-Mn component to the mass of low-Mn component is from 0.2 to 5, (ii) molecular weight ratio of high-Mn to low-Mn component is from 2 to 8; typical amount of such surfactants based on the combined weight of polyester and nonionic surfactants being preferably 5-20 wt%.

## Description

### FIELD OF THE INVENTION

The present invention relates to polyol composition and its use in polyisocyanurate (also referred to as PIR) and polyurethane-polisocyanurate (PUR-PIR) foams processing. In particular the invention concerns polyol composition, comprising polyester and polyether components, for continuous rigid faced and flexible faced lamination.

### Definitions

The following terms will be used throughout the patent application with a meaning defined as follows:
**Polyhydroxy alcohol** - polyfunctional raw material containing hydroxyl groups used for obtaining ester groups (bonds), (e.g. diol, triol, tetraol, glycol);
**Polycarboxylic acid component** - polyfunctional acid/anhydride raw material containing carboxylic groups, anhydride or their mixture used for obtaining ester groups (bonds);
**Aromatic component** - polyhydric alcohol or polycarboxylic acid component containing aromatic group(s);
**Recycled component** - pre- or postconsumer polyester component, e.g. PET polyethylene terephthalate);
**Catalyst** - a substance which increases the rate of a chemical reaction, e.g. polycondensation;
**Polyester polyol** - a polyester containing multiple hydroxyl groups (1.5 or more) made from polyhydric alcohol and polycarboxylic acid component bound together forming oligomer, loosing small molecules by-products as a water, methanol etc.;
**Condensate** - a by-product of the polycondensation reaction, mainly water;
**Functionality (f)** - the term indicates the average number of functional OH group per molecule in a raw material or product;
**Isocyanate index (NCO Index)** - is the ratio of the equivalent amount of isocyanate used relative to the theoretical equivalent amount of OH groups multiplied by 100.
**Contact time** - Continuous Rigid faced and Flexible faced lamination production parameter, defined as the time from pouring reaction mixture to the contact of rising foam with the top facing in laminator.
**Gel time** - Continuous Rigid faced and Flexible faced lamination production parameter, defined as the time from pouring to gelling of reaction mixture
**Delta** - Difference between Gel time and Contact time.
**PIR core density** - Density in kg/m3 of the PIR rigid foam from sandwich panel, placed between flexible or rigid facing
**Line speed** - Continuous Rigid faced and Flexible faced lamination production parameter, defined as a speed of laminator during lamination process.
**Reaction to fire-** According to the European standard EN 13501-1,
**Molecular weight (Mn)** - number average molecular weight calculated as 56110 x f/OH number, where f is OH functionality (not to be confused with standard molecular weight, MW).
**RFL** - rigid faced lamination
**FFL** - flexible faced lamination

The terminology used herein is for the purpose of description only, and is not intended to be limiting, since the scope of the present disclosure will be limited only by the appended claims. All technical and scientific terms used herein have the same meaning as commonly understood by one of ordinary skill in the art. Any methods and materials similar or equivalent to those described herein can also be used in the practice or testing of the present disclosure.

Embodiments of the present disclosure will employ techniques of chemistry, polymer chemistry, and the like, which are within the state of the art. These techniques are explained fully in the literature.

Unless indicated otherwise, parts are parts by weight, temperature is in °C, and pressure is in atmospheres.

Before the embodiments of the present disclosure are described in detail, it is to be understood that, unless otherwise indicated, the present disclosure is not limited to particular materials, reagents, reaction materials, manufacturing processes, or the like, as these can vary.

It must be noted that, as used in the specification and the appended claims, the singular forms "a," "an," and "the" include plural referents unless the context clearly dictates otherwise.

### BACKGROUND OF THE INVENTION

Polyisocyanurate (PIR) foams, more precisely polyisocyanurate (PIR) with NCO index 300+/- 100, has been used as common insulation materials since decades. Currently PIR foams have to pass well-defined tests which are under region law regulations and depend also on application. In the area of metal-faced sandwich panels all tests and requirements are described in harmonized standard EN 14509:2013.

PIR foams are well known since 1980's, however, not essentially for sandwich panel production. John S. [4,760,099] et al. described basic formulation for insulating PIR foam. A premix composition for use in a foam-forming reaction with an organic polyisocyanate comprising at least one polyol, at least one halogenated organic blowing agent, at least one amino catalyst and at least one polyvalent metal-containing organometallic compound. Since 1980's some of the physical blowing agents like CFCs have been forbidden due to change of environmental legal regulation. Hydrocarbon blowing agents, such as pentane, cyclopentane and isopentane or its mixtures, have been used as alternatives to the traditional CFCs in the rigid foam insulation sector, especially rigid and flexible faced lamination. However, as a consequence this change has caused problem with miscibility of physical blowing agent and polyesters, which has a negative influence on the quality of the sandwich panel, defined as presence of pinholes on the surface.

Week miscibility of pentanes with base polyester has resulted in development of a nonionic surfactants via last 30 years. However, it is well known for a skilled person that even high pressure mix head is not enough to get good lambda (<22 mWK) of PIR foam as well as a planar surface. Stable emulsion is essential in most cases to get extremally low lambda in metal and flexible faced panels. Jimmy L Patterson et. al [US5464562] showed that the main polyol for production of the insulating PIR foams for sandwich panel production is polyester polyol. Unfortunately, the hydrocarbons, mainly isomers of pentane, have limited or no solubility in most of polyester polyols. To avoid phase separation, the hydrocarbon blowing agent must either be metered into a high pressure mix head, or fed into the day tank under agitation to keep the hydrocarbon mixed with the polyol. They showed that the low molecular weight monofunctional emulsifiers (molecular weight, MW<1000 g/mol) have positive influence on the emulsion stability and decrease in foam density. However, there was no discussion on the influence of these additive on thermal insulation coefficient as well as influence on processing the polyester and quality of final rigid foam, which are critical application features. According to Patterson et. al C-C blowing agent is emulsified with the compound having polyester linkages by mixing with the monol to form an emulsified polyol composition, after which the organic aromatic isocyanate is reacted with the emulsified polyol composition. The hydrocarbon blowing agent may be emulsified with the polyol by using a monol, or the polyisocyanate may be reacted with a polyol composition in the presence of the hydrocarbon blowing agent without first forming an emulsion. An emulsion forming agent is a polyoxyalkylene polyether monol initiated with a C8-C24 fatty hydrocarbon having one alkylene oxide active hydrogen atom, MW<1000 g/mol/ but more than 350 g/mol, homopolymer, block or random copolymer of propylene, ethylene oxides. Preferred fatty alcohols include octyl alcohol, nonyl alcohol, decyl alcohol, dodecyl alcohol, tetradecyl alcohol, cetyl alcohol, lauryl alcohol, palmityl alcohol, stearyl alcohol, hydrogenated tallow alcohol, and mixtures thereof. All of the investigated monols were low MW monols, commercially avaible. According the invention of Patterson et. al, alkoxylates working as emulsifier were low molecular weight polymers with MW below 1000 g/mol. There was here discussion of influence of the additive for emulsion stability as well as for getting lower density of the rigid foam. However, it is obvious for skilled person that by adding monols, therefore decreasing crosslinking of the gelling foam, the density of the foam is lowered.

F. Leo Hickey et. al. [5,922,779] contrary to Patterson et. al [US5464562] disclosed a polyester polyol mixture with higher MW surface active agent from 3000-6000 g/mol. However, they also do not discuss the relation of emulsion stability to any properties of PIR foam made thereofwhat is crucial from the application point of PIR foam. In details they disclosed an aromatic polyester polyol and its compostion forming stable emulsion with pentanes The composition of polyester polyols was made using: an aromatic polyol and a nonionic surfactant. Nonionic surfactant is crucial here, as the invention provides resins that have increased phase stability when forming emulsion with pentanes. In this aspect the invention employs polyoxyalkylene surfactants in combination with certain polyester polyols and hydrocarbon blowing agent. F.Leo Hickey et. al. teach that a nonionic surfactant is prefereably a derivate from at least one starting compound whitch is selected from the group comprising: i) fatty alcohols ii) fatty amides, iii) fatty amines iv) fatty acids, v) phenols and/or alkyl phenol vi) fatty and oils and vii) polyoxopropylene glycols containg from 10-70 moles of propylene oxide. One class of applied nonionic surfactants contains at least one block of 5 propoxy units and at least 5 ethoxy units, with total MW at least 3000 g/mol to 6000 g/mol, preferably the ethylene oxide content ranges from about 20-60 wt%, more preferably from 30 to 40 wt%. Typical amount of such surfactant based on the combined weight of polyester and nonionic surfactant is preferably 6-20 wt%. Examples from 1-14 present polyester polyols formulation containing surfactans, mostly EO/PO. Table 2 (C1 ,C6,C9) and Table 3 (C10-C18) show the results of phase stability of blend polyol resin with n-pentane. Most of them are stable for one week, however, some (C17-C19) loose stability within one hour when lower amount of hydrophobizing agent (reacted soybean oil) is in the structure of base polyester.

The patent BE1027823B1 discloses a composition for PIR foam containing a polyol which is a mixture of a polyether polyol and polyester polyol with a weight ratio between 2:7 and 4:7. The inventors claim that the ratio of polyether polyol to polyester polyol results in a PIR foam material with good adhesion capacity, while the thermal insulation of the foam material stays optimal. The polyether component is said to preferably contain at least two different polyethers, however, they contain at least two or more functional groups.

The patent BE1027812B1 discloses a composition for PUR foam containing a polyol which is a mixture of at least three different polyether polyols amounting at least 75.0% by weight based on the total weight of the polyol component. The polyether polyols contain at least two or more functional groups. The use of such a mixture results in good adhesion of PUR materials to substrates and allows compatibility with different types of polyisocyanates.

The patent application WO2020231603A1 discloses polyol composition comprising at least one polyester polyol and one or more nonionic surfactants having a hydrophilic-lipophilic balance (HLB) in the range 13 to 18.5, wherein the term 'nonionic surfactants' encompasses inter alia ethoxylates of fatty alcohols. The nonionic surfactant typically includes at least one poly(oxyethylene) block wherein the poly(oxyethylene) block or blocks constitute at least 65% of the total weight of the surfactant. The poly(oxyethylene) block or blocks in general constitute the hydrophilic portion of the surfactant molecule. The nonionic surfactant further contains at least one hydrophobic block, which may be, for example, a hydrocarbon block containing at least 6, at least 8, at least 10 or at least 12 carbon atoms. The inventors claim that the selection of a high HLB surfactant provides excellent compatibility between the terephthalate-based polyester polyol and the hydrocarbon blowing agent resulting in smoother surface of a panel produced using the composition. However, they were able to prove this mostly for the polyols with high HLB, exceeding 15. For the polyols with HLB < 10, the results are not so good.

The document US6359022B1 teaches about polyol blend comprising polyester polyol and a hydroxylated material with a functionality at least 2. The blend results in increased phase stability and lower viscosity compared to known blends and does not require the presence of nonionic surfactants. The inventors also state that the presence a monohydroxyl material can weaken polyurethane or polyisocyanurate foam structure by causing termination of polymer chains.

It was therefore an object of the present invention to provide a polyol composition comprising polyester and polyether components for continuous rigid and flexible lamination with enhanced processability during lamination resulting in more planar sandwich panel surface as well as PIR and/or PUR-PIR core foam with lower lambda parameter.

### SUMMARY OF THE INVENTION

The first object of the present invntion is a polyol composition, comprising:
A. a polyester polyol with an aromatic polyester backbone, wherein the aromatic polyester polyol is an catalyst-mediated esterification reaction product at least of: a polyfunctional alcohol; an aromatic polycarboxylic acid component or polycarboxylic acid anhydride component or mixture thereof; and
B. a mixture of at least two polymers polyether polyols, having a block structure of alkoxy chain, preferably being a block copolymer of polyethylene oxide and polypropylene oxide, more preferably OH monofunctional block copolymer of polyethylene oxide and polypropylene oxide initiated with hydroxyl alcohol C12-C14 and C16-C18,
wherein a first polyether polyol has high number average molecular weight (high-Mn component) and a second polyether polyol has low number average molecular weight (low-Mn component) such that:
(i) mass ratio of high-Mn component to the mass of low-Mn component is from 0.2 to 5,
(ii) molecular weight ratio of high-Mn to low-Mn component is from 2 to 8; typical amount of such surfactants based on the combined weight of polyester and nonionic surfactants being preferably 5-20 wt%.

Preferably in the polyol composition the poylester polyol has a hydroxyl value of 100 to 400 mg KOH/g and an average functionality of 1.0 to 3.0.

Preferably in the polyol composition the polyfunctional alcohol is selected from the group comprising: ethylene glycol, diethyleneglycol, triethyleneglycol, polyethylene glycol, 1,2-propylene glycol, dipropylene glycol, trimethylene glycol, an isomer of butanediol, an isomer of pentanediol, an isomer of hexanediol, an isomer of heptanediol, an isomer of octanediol, an isomer of decandiol, an isomer of dodecandiol, an isomer of glycerol, an isomer of polyglycerol, an isomer of monomethylolpropane, an isomer of dimethylolpropane, an isomer of trimethylolpropane, an isomer of pentaerythritol and/or a combination thereof.

Preferably in the polyol composition the polycarboxylic acid or polycarboxylic acid anhydride are selected from the groups comprising:
- aromatics: phthalic acid; isophthalic acid; trimellitic acid; terephthalic acid; phthalic acid esters; phthalic acid anhydride; tetrahydrophthalic acid anhydride; pyromellitic dianhydride; tetrachlorophthalic acid anhydride; tetrabromophtalic acid anhydride; residues from the manufacture of phthalic acid or phthalic anhydride, residues from the manufacture of terephthalic acid, or a combination thereof;
- aliphatics: maleic acid, fumaric acid, maleic anhydride, oxalic acid, malonic acid, succinic acid, glutaric acid, glutaric acid anhydride, adipic acid, pimelic acid, suberic acid, azelaic acid, sebacic acid, or a combination thereof.

Preferably in the polyol composition the catalyst(s) are selected from the group comprising: tetraisopropyl titanate, tetrabutyl titanate salts, stannous octoate, stannous oleate, stannous acetate, stannous laurate, dibutyl tin dilaurate, sodium and potassium acetate, or a combination thereof.

Preferably in the polyol composition the molecular weight of the high-Mn polyether polyol is below 10 000 g/mol, preferably in the range from 2000 g/mol to 5000 g/mol.

Preferably in the polyol composition the molecular weight of the low-Mn polyether polyol is below 2000 g/mol, preferably below 1000 g/mol, and above 350 g/mol.

Preferably in the polyol composition an additional third polyether polyol can be optionally applied, preferably with Mn >2000 g/mol, more preferably diol or triol random copolymer EO/PO.

Preferably the polyol composition optionally comprises further an oil selected from the group comprising: oil from or derived from rapeseed, soya, coconut, sunflower, palm, tallow, tall oil fatty acid, or a combination thereof.

Preferably in the polyol composition the polyester polyol comprises polyester additive(s) selected from the group comprising: virgin polyethylene terephthalate), recycled polyethylene terephthalate), glycol-modified polyethylene terephthalate), poly(butylene terephthalate), poly(trimethylene terephthalate), or a combination thereof.

Preferably the polyol composition optionally comprises flame retardants selected from the group of phosphorus-containing compounds, preferably diethyl ethanephosphonate, dimethyl propylphosphonate, triethyl phosphate, diphenyl cresyl phosphate, tris(2-chlorisopropyl)phosphate (TCPP), triphenyl phosphate, aryl phosphate and/or ammonium phosphate.

Another object of the present invention is an isocyanate-reactive composition comprising at least:
a) the polyol composition as defined above
b) a catalyst
c) a blowing agent
d) a silicon stabilizer
e) a flame retardant

Preferably in the isocyanate-reactive composition the blowing agent is selected from the group comprising:
- physical blowing agents: n-pentane, i-pentane, c-pentane or its mixtures, hydrofluoroolefins (HFOs) or its mixtures,
- chemical blowing agents: water, formic acid, lactic acid.

Preferably in the isocyanate-reactive composition the catalyst is a trimerization catalyst, preferrably potassium octoate or potassium acetate.

Another object of the present invention is a process for producing rigid foam, comprising mixing an organic isocyanate with the isocyanate-reactive composition according to any one of claims 12-14 at an isocyanate index above 230 to form a reaction mixture.

Preferably the process takes place in a continuous production line.

Preferably in the process the reaction mixture is poured into a cavity of a mold of a desired part, wherein the cavity is lined with a facer.

Another object of the present invention is a metal-faced panel obtained by the process as described above, with thickness from 60 mm to 2000 mm, core density from 33 to 42 kg/m3, reaction to fire equal B-s1,d0, fire resistance equal to at least EI30, lambda below 0.022 W/mK, according to harmonized standard EN 14509:2013.

### DETAILED DESCRIPTION OF THE INVENTION

The objects of the present invention are a novel polyester polyol composition for continuous rigid faced and flexible faced lamination with enhanced processability during lamination resulting in more planar sandwich panel surface as well as PIR and/or PUR-PIR core foam with lower lambda parameter.

In one embodiment, the aromatic polyester polyol is an esterification/transesterification reaction product of 20-70 wt% of polyhydric alcohol(s), 0-20 wt% of non-aromatic polycarboxylic acid component(s), 20-70 wt% of aromatic polycarboxylic acid component(s), optionally 0-20 wt% of polyester additive(s); optionally 0-2 wt% of catalyst(s); 2.5 -20 wt% of two monofunctional additives, both low and high-Mn with mass ratio from 0.2-to 5, and optionally 0-10 wt% of oil additive/(s).

In one embodiment, the esterification/transesterification reaction of listed components is being done preferably in the presence of esterification catalysts, advantageously in an atmosphere of inert gas, e.g. nitrogen, helium, argon, etc., in the melt state at temperatures from 150 to 280° C, preferably from 180 to 260° C, optionally under reduced pressure, to the desired acid number which is advantageously less than 10, preferably less than 3.

In one embodiment a novel polyester polyol composition is obtained by incorporation of polyether polyol or a mixture of polyether polyols, preferably two polyethers polyols, where Mn mass ratio of high-Mn to low-Mn is above 2, preferably above 4, but less than 8, preferably mass ratio between both nonionic polyether polyols is from 0.2-5. The molecular weight of high-Mn is below 10 000 g/mol, preferably below 5000 g/mol. The molecular weight of low-Mn is below 2000 g/mol, preferably below 1000 g/mol. Polyether polyols are preferably monofunctional block copolymer of polyethylene oxide and polypropylene oxide initiated with hydroxyl alcohol C12 and C18.

In one embodiment the invention relates to an aromatic polyester polyol composition, wherein
- the polyhydric alcohol(s) is selected for example from the group comprising: monoethylene glycol (MEG), diethylene glycol (DEG), triethylene glycol, polyethylene glycol, 1 ,2-propylene glycol, dipropylene glycol, trimethylene glycol, an isomer of butanediol, an isomer of pentanediol, an isomer of hexanediol, an isomer of heptanediol, an isomer of octanediol, an isomer of decandiol, an isomer of dodecandiol, an isomer of glycerol, an isomer of polyglycerol, an isomer of monomethylolpropane, an isomer of dimethylolpropane, an isomer of trimethylolpropane, an isomer of pentaerythritol, and a combination thereof. In an embodiment, the amount of polyhydric alcohol(s) included in the reaction mixture can be 20 to 70 wt% of the total reaction mixture.
- the nonaromatic polycarboxylic acid component(s) is selected for example from the group comprising: maleic acid, fumaric acid, maleic anhydride, oxalic acid, malonic acid, succinic acid, glutaric acid, glutaric acid anhydride, adipic acid, pimelic acid, suberic acid, azelaic acid, sebacic acid, and a combination thereof. In an embodiment, the amount of nonaromatic polycarboxylic acid component(s) included in the reaction mixture can be 0 to 20 wt% of the total reaction mixture.
- the aromatic polycarboxylic acid component(s) is selected for example from the group comprising: phthalic acid, isophthalic acid, trimellitic acid, terephthalic acid, phthalic acid esters, phthalic acid anhydride, tetrahydrophthalic acid anhydride, pyromellitic dianhydride, tetrachlorophthalic acid anhydride, tetrabromophtalic acid anhydride, residues from the manufacture of phthalic acid or phthalic anhydride, residues from the manufacture of terephthalic acid, and a combination thereof. In an embodiment, the amount of aromatic polycarboxylic acid component(s) included in the reaction mixture can be 20 to 70 wt% of the total reaction mixture.

The polyester polyols composition according to the invention is suitable for a skilled person for production, in continuous process, of polyisocyanurate (PIR) foam with NCO index 300 +/- 100 in sandwich panels with thickness 40 mm - 200 mm, with PIR core density 33-42 kg/m3 for metal faced sandwich panels (RFL) or sandwich panels with thickness 20 mm - 250 mm, with PIR core density 25-35 kg/m3 for flexible faced sandwich panel (FFL). The continuous production line settings as below: line speed about 5-10 m/minute for RFL, line speed about 8-40 m/minute for FFL with corona discharge steel threatment system for RFL, temperature of laminator 55-75 °C, length of laminator minimum 25 m, polyol temperature 20-28 °C, 2 component (2K) or 1 component (1K) primer (around 100 g/m2), and polymeric MDI as component B, preferably Ongronat 2500 or Cosmonate m200. Processing parameters: (i) RFL- contact time: 15-35 sec, gel time 16-36sec, delta between gel time vs contact time in the range of 1s-12s, preferably 2s-6s. Wall metal faced panels obtained in that way: pass reaction to fire equal B-s1,d0 and fire resistance equal to EI30, as well as lambda below 0.022 W/mK, according to the method harmonized standard EN 14509:2013 (ii) FFL - contact time:10s-25s, gel time 11s-26s, delta between gel time vs contact time in the range of 1s-10s, preferably 2s-5s. Flexible faced panels obtained in that way: pass reaction to fire equal B-s1,d0, as well as lambda below 0.022 W/mK, according to the harmonized standard method EN 13165+A2:2016-08.

In one aspect of the invention it has been surprisingly found that, during the process of continuous rigid PIR and PUR-PIR high pressure metal facing RFL and flexible facing FFL lamination, the parameters as listed below;
- lambda of PIR core foam and
- the quality of surface of metal and flexible facing lamination and
- the processing window for rigid and flex continuous PIR foam lamination (delta widens and there is no need to keep a very precise position of the top of the cone during rise of the PIR foam at laminator) and
- life time of dosing unit (pokers, pouring pipes) for rigid and flex continuous PIR foam lamination machine
are improved by creating emulsion between hydrophilic polyester polyol and hydrophobic physical blowing agent during foaming process by using a mixture of at least two polymers polyether polyols in the composition, wherein
(i) the polyether polyols possess block structure of alkoxy chain, preferably block copolymer of polyethylene oxide and polypropylene oxide, more preferably OH monofunctional block copolymer of polyethylene oxide and polypropylene oxide initiated with hydroxyl alcohol C12 and C18,
(ii) more preferably the mass ratio of high-Mn component to the mass of low-Mn of two polyethers polyols is from 0.2 to 5,
(iii) the high-Mn/low-Mn ratio of two polyether polyols is >2 but less than 8; a typical amount of such surfactants based on the combined weight of polyester and nonionic surfactants is preferably 5-20 wt%,
(iv) the molecular weight of high-Mn polyether polyol is below 10 000 g/mol, preferably in the range of 5000 g/mol to 2000 g/mol,
(v) the molecular weight of low-Mn emulsifier is below 2000 g/mol, preferably below 1000 g/mol, above 350 g/mol,
(vi) additionally third polyether polyol Mn >2000 g/mol can be optionally applied, a diol or triol, random copolymer EO/PO ,
(vii) the physical blowing agent is one belonging to the group of carbohydrates, preferably n-pentane, cyclopentane, iso-pentane and its mixtures in typical PIR foam formulation in metal-faced lamination and flexible face lamination, suitable for use also in other insulation applications.

Based on the experiments it has been revealed that trifunctional low molecular weight reactive emulsifying agents, applied alone above 10 wt% in composition of polyester polyol are not suitable for high speed continuous flexible lamination panels. A tendency is observed to form solid fouling on the walls of pokers, pouring pipes, and finally stopping the production line. In the another aspect of the invention it has been suprisingly found that the fouling effect can be eliminated by adding in part a monofunctional emulsifier which is under the invention.

### General synthesis procedure of polyester polyol

In a 2-liter reaction vessel equipped with an agitator, heat transfer jacket and distillation column with condenser, in inert gas and at atmospheric pressure the following components are placed: (i) a desired amount of the polyhydric alcohol(s) [in g] (ii) then a desired amount [in g] of a aromatic and/or a nonaromatic polycarboxylic acid and/or PET. (iii) then esterification catalysts are placed into the reactor. The reaction conditions are as follows: (i) ambient pressure or vacuum (ii) temperature about 150-240°C (iii) under inert gas sparging. During the process, the acid value of the reaction mixture is monitored by periodic sampling of the reaction mixture. When acid number is lower than 10 mgKOH/g polyether polyol(s) are added in the amount of 3-30 wt%. Product is than cooled down below 80°C and additional components, as for example liquid flame retardants and/or antioxidants are added. The product is completed after at least 2 hours of conditioning below 80°C, not lower than 20°C.

**Table 1. Selected examples of synthesis according to general synthesis procedure.**

| **Example** | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|
| DEG [g] | 520 | 610 | 585 | 580 | 600 | 380 | 165 | 170 | 350 | 600 | 590 | 480 | 460 | 580 | 550 |
| TEG [g] | | | | | | 200 | 310 | 320 | 50 | | | | 190 | | 80 |
| MEG [g] | | | | | | | | | | | | 50 | | | |
| PA [g] | 400 | 450 | 430 | 451 | 458 | 440 | 115 | 145 | 200 | 460 | 460 | 155 | 120 | 60 | 70 |
| AA [g] | | | 50 | | | | 120 | 120 | 70 | | | 125 | 130 | 50 | 80 |
| TPA [g] | | | | | | | | | | | | | 60 | 300 | 190 |
| IPA [g] | | | | | | | | | | | | 30 | | | 90 |
| PET recycled [g] | | | | | | | 320 | 330 | 260 | | | 235 | 225 | | |
| LM [g] Polyether polyol, Alcohols C12-14 ethoxylated propoxylated | | 85 | 45 | | | | | 80 | | 30 | 30 | 80 | 75 | 60 | |
| HM [g] Alcohols C16-18, etoxylated, propoxylated | | 30 | | 45 | | 40 | | 30 | 20 | 30 | 30 | 25 | 50 | 30 | 20 |
| IAL HCO-40 [g] Hydrogenated castor oil, 40 mol EO | | | | | 85 | 65 | | | 20 | | | | | | 65 |
| TiPT (catalyst) [g] Tetraisopropyl titanate | 0.2 | 0.50 | 0.20 | 0.20 | 0.40 | 0.40 | 0.10 | 0.10 | 0.10 | 0.20 | 0.20 | 0.10 | 0.10 | 0.20 | 0.20 |
| Process temperature [°C] | 220 | 220 | 220 | 220 | 220 | 220 | 240 | 240 | 240 | 220 | 220 | 240 | 240 | 240 | 240 |
| TCPP [g] | | 75 | | | | 25 | 55 | 60 | 100 | 250 | 220 | | | | |
| TEP [g] | | | | | | 10 | | | | | | | | | |
| Other component 1 [g] | 120¹⁾ | | 11¹⁾ | | | | | | 100¹⁾ 15³⁾ | 100²⁾ | | | | 30²⁾ | 20²⁾ |

| | | | | | | | | | | | | | | | |
|---|---|---|---|---|---|---|---|---|---|---|---|---|---|---|---|
| **Other component 1 [g]** ¹⁾-Castor oil, ²⁾- Rokopol PE 40, ³⁾ Glycerin | | | | | | | | | | | | | | | |

**Table 2. Analytical and foaming results of composition examples 1-15.**

| **Example** | **Method** | **1** | **2** | **3** | **4** | **5** | **6** | **7** | **8** | **9** | **10** | **11** | **12** | **13** | **14** | **15** |
|---|---|---|---|---|---|---|---|---|---|---|---|---|---|---|---|---|
| | | | | | | | | | | | | | | | | |
| OH [mgKOH/g] | PN-EN ISO 2114 | 245.4 | 243.5 | 250.3 | 267.63 | 254.6 | 198.5 | 197.8 | 190.6 | 198.5 | 195.3 | 201.84 | 295.2 | 296.7 | 315.7 | 315.2 |
| Viscosity at 25°C [mPas] | PN-EN ISO 3219 | 2200 | 3650 | 3758 | 5890 | 5270 | 4870 | 6120 | 3900 | 7700 | 2745 | 2250 | 3560 | 3480 | 2270 | 2710 |
| Acid number | (PN-EN ISO 2114, | 0.81 | 2.15 | 2.08 | 2.10 | 2.15 | 2.26 | 0.54 | 0.73 | 1.35 | 1.58 | 1.79 | 1.27 | 1.35 | 1.40 | 1.37 |
| Water [wt%] | PN ISO 760, | 0.05 | 0.10 | 0.09 | 0.05 | 0.08 | 0.10 | 0.04 | 0.06 | 0.08 | 0.10 | 0.10 | 0.08 | 0.08 | 0.08 | 0.09 |
| Emulsion stability with pentane [days] | Internal method | 0 | 30 | 1 | 14 | | 20 | 2 | 30 | 22 | 25 | 25 | 30 | 30 | 30 | 24 |
| Emulsion stability with Cyclopentane, isopentane [days] | Internal method | 0 | 30 | 1 | 12 | 20 | 28 | 2 | 30 | 22 | 28 | 28 | 30 | 30 | 30 | 24 |
| Density of the PIR core | | 39 | 38 | 38 | 38.5 | 38.5 | 39 | 38.0 | 38.5 | 38.0 | 38 | 38.5 | 38 | 38 | 38.5 | 38 |
| Lambda [m W/m·K] | PN ISO 8302 | 21.5 | 20.5 | 21.1 | 21.0 | 21 | 20.6 | 21.2 | 20.7 | 20.8 | 20.8 | 20.8 | 20.7 | 20.6 | 20.7 | 21.0 |
| Delta gel/contact on production foaming machine [s] | Internal method | 4 | 3-4 | 3-4 | 3-4 | 3- | 2-4 | 3 | 3-4 | 3-4 | 2-5 | 3-4 | 3-4 | 3-4 | 2-5 | 2-5 |
| Panel surface quality [scale 1-5] | Internal method [from 1 to 5] | 1 | 5 | 4 | 4 | 3 | 5 | 2 | 5 | 4 | 5 | 5 | 5 | 5 | 4 | 4 |
| Life time of poker | Internal method | normal | normal | normal | normal | short | normal | normal | normal | normal | normal | normal | normal | normal | normal | Normal |

### Synthesis procedure of PIR metal facing sandwich panel

### Example 16. Formulation for metal-faced panel with thickness 100 mm, line speed 6-8 m/min

| | |
|---|---|
| The Polyester Polyol/polyols | 100 g |
| Tegostab B 84504 | 2.4-2.8 g |
| Water: | 0.6 g |
| N-pentane | 12-13g |
| Kosmos 75LV | 2.2-3.2 g |
| PMDTA | 0.3-0.4 g |
| Flame retardant - TCPP | 15 g |
| PMDI- Ongronat 2500 | 185 g |

### Example 17. Formulation for metal-faced panel with thickness 100 mm, line speed 6-8 m/min

| | |
|---|---|
| The Polyester Polyol/polyols | 100 g |
| Tegostab B 84504 | 2.4-2.8 g |
| Water: | 0.6 g |
| C-I-pentane | 12-13 g |
| Kosmos 75LV | 2.2-3.2 g |
| PMDTA | 0.3-0.4 g |
| Flame retardant - TCPP | 15 g |
| PMDI- Ongronat 2500 | 185 g |

The metal face panels (examples 16 and 17) obtained by using a polyester have to show appropriate reaction to fire equal B-s1,d0 and fire resistance equal at least to EI30, as well as lambda below 0.022 W/mK, according to harmonised standard EN 14509:2013.

The compositions according to the invention are suitable for production by continuous production line (i.e. OMS or SAIP or Hennecke) of polyisocyanurate (PIR) foam, panels with thickness 40 mm- 200 mm, core density 33 - 42 kg/m3. Continuous production line setup is as below: line speed about 5-10 meters per minute, temperature of laminator55-68°C, length of laminator - minimum 25 m, polyol temperature 20-27°C, 2K or 1 K primer (around 100 g/m2), and polymeric MDI as component B, preferably Ongronat 2500 or Cosmonate m200. The amount of MDI is defined mainly by the desired NCO index. Usually from 270 to 350, preferably 320.

### Synthesis procedure of PIR flexible facing sandwich panel

### Example 18. Formulation for flexible facing panel with thickness 100 mm, line speed 20 m/min

| | |
|---|---|
| The Polyester Polyol/polyols | 100 g |
| Tegostab B 84507 | 2.4-2.8 g |
| Water: | 0.8-1.2 g |
| Cyclo-iso-pentane, n-pentane | 13-16 g |
| Kosmos 75LV | 4-5 g |
| PMDTA | 0.4-0.6 g |
| Flame retardant - TEP | 11 g |
| PMDI- Ongronat 2500 | 220 g |

### Example 19. Formulation for flexible facing panel with thickness 100 mm, line speed 20 m/min

| | |
|---|---|
| The Polyester Polyol/polyols | 100 g |
| Tegostab B 84507 | 2.4-2.8 g |
| Water: | 0.8-1.2 g |
| iso-pentane, | 16-22 g |
| Kosmos 75LV | 4-5 g |
| PMDTA | 0.4-0.6 g |
| Flame retardant - TEP | 11 g |
| PMDI- Ongronat 2500 | 220 g |

The composition according to the invention are suitable for production by continuous production line (i.e. OMS or SAIP or Hennecke) - polyisocyanurate (PIR) foam, panels with thickness 40 mm- 200 mm, core density 27-35 kg/m3. Continuous production line setup is as below: line speed about 8-40 minutes per minute, temperature of laminator55-68°C, length of laminatorminimum 25 m, polyol temperature 20-27°C, and polymeric MDI as component B, preferably Ongronat 2500 or Cosmonate m200. The amount of MDI is dependent mainly on the desired NCO index. Usually from 250 to 350, preferably 280.

### Results and discussion

### PAIDEG polyester polyols composition

*emulsion stability, insulation properties, quality of the sandwich panel panel made from it* It turned out unexpectedly that the nonionic surfactants in polyester polyol composition have influence on thermal insulation properties of PIR core and surface properties rigid PIR and PUR-PIR sandwich panels and boards. Examples 1-6 illustrate the influence of surface active nonionic surfactants in the composition of PA/DEG polyester polyol on emulsion stability, foaming process and PIR core foam surface quality properties. According to the invention the applied surface active nonionic surfactants: (i) LM (ii) HM are examples of low- and high-Mn OH monofunctional components which applied at the same time have positive influence on the lambda and quality of the sandwich panel surface, contrary to the nonionic surfactants applied separately or without any of surface active nonionic surfactants.

Applied singly OH trifunctional polyether polyol IAL HCO-40 at higher concentration ~10wt%, shown as a reference, illustrates the influence of higher functionality on shorter shelf-life of dosing unit (pokers).

**Example 1** is simple PA/DEG polyester showing week emulsifying properties in laboratory test where separation was observed below 2 hours, finally after foaming with PMDI; the surface quality of PIR foam was full of pinholes. The quality of the sandwich panel was much below industrial requirements. In spite of hydrodynamic mixing, high surface energy of polyester caused coalescence of cells with physical blowing agent (hydrocarbons), nucleation agent (air,) in reaction mixture with MDI forming pinholes.

**Example 2** is PA/DEG polyester made according to the invention with two OH monofunctional EO/PO block copolymers with low- and high-molecular weight with Mn ratio 3.1 and mass ratio high-Mn to low-Mn equal to 0.35 in the composition. The product forms stable emulsion in laboratory emulsification process for more than 30 days. What's more, during continuous lamination production process conducted on high pressure foaming machine, the final surface of the panel is planar, without any pinholes. Life time of dosing pipes is normal, on average above 8 hours. Insulation properties (lambda coefficient) of the PIR core metal-faced panel obtained according to the invention are significantly better than metal-faced panels made from the system without block EO/PO copolymers.

**Examples 3 and 4** are comparative examples which illustrate influence on properties of polyester and PIR foam of low and high-Mn monol emulsifiers applied singly. It is clearly seen that low-Mn emulsifier has much lower stability of emulsion with pentanes in laboratory emulsification process and test, below one day. Whereas high-Mn emulsifier separately is giving better emulsion stability in laboratory emulsification process than polyester combined with the low-Mn emulsifier. The emulsion is stable 14 days. In spite of difference in emulsion stability a strong influence of Mn of block EO/Po copolymer on the speed of forming emulsion has been suprisingly observed. Namely polyester with low-Mn contrary to high-Mn emulsifier is creating emulsion (hand mixing) in the first 30 second of mixing, whereas the second one requires much more than 50 seconds. The second observation, which confirms the difference in mixing time of pentane in polyester compostion, is partially linked with the lost of pentane during laboratory emulsification process: namely the faster the emulsification, the lower loss of pentane during emulsification process. It can be obviously explained by a skilled person.

In spite of difference in laboratory emulsification test and stability of the emulsion, better results were observed in Examples 3 and 4 for the surface quality of metal-faced panel than in Example 1 (base polyester polyol without any polyether additive), but worse than in the case of Example 2. Example 2 was made according to the invention. During continuous rigid PIR and PUR-PIR high pressure metal facing RFL and flexible facing FFL lamination some single pinholes were observed. What's more, lambda coefficient is significantly lower than in Example 1, but higher than in Example 2, what can also suggest an influence on orientation effect of the cells in sandwich panel.

### PAIDEG polyester polyols composition

*Blocking effect of pouring pipes systems during continuous lamination sandwich panel production*

Blocking effect (fouling) of pouring pipes systems during continuous lamination has profound influence on the economy of lamination. An appearance of the blocking phenomena during production immediately results in stopping of the continuous production line and/or production of the off-grade sandwich panel.

**Examples from 1-4** do not have negative influence on poker life time of the dosing system, fouling of the pokers is observed after around 8 hours, depending on the output of the dosing system, with thickness of the panel and speed of the production line. Blocking effect on pouring pipes of laminating foaming machine was observed for some of emulsifiers (polyethers) with higher OH functionality and higher load.

**Example 5** is a comparative example illustrating negative influence of trifunctional reactive low-molecular weight ethoxylated emulsifier on the fouling/blocking effect of the pokers (pouring system). Namely shortly after a several dozen minutes of the panels production pokers was blocked due to fouling effect.

The observed blocking effect of pouring pipes systems during continuous lamination foaming can be related to higher OH functionality of the reactive polyether polyol, accelerated by low-Mn and high amount, resulting in higher crosslinking of reaction mixture. At this stage, during pouring temperature is below 55°C, therefore, the main chemical trimerization reaction (main crosslinking reaction) between MDI molecules does not occur. For the skilled person, faster forming of polyurethane gel and, therefore, faster fouling of solids in pouring pipes with polyester containing low-Mn trifunctional can be explained by much more higher crosslinking density of the reaction mixture of polyols with MDI, but not because of trimerization reaction between MDI molecules.

This effect can be overcome by decreasing average functionality of polyether emulsifiers. According to the invention additionally to trifunctional OH emulsifier also a monofunctional emulsifier was applied, that solved the problem with the observed blocking effect of pouring pipes systems during continuous lamination foaming.

**Example 6** illustrates the solution discussed above. Namely adding high-Mn monofunctional emulsifier to the low-molecular OH trifunctional emulsifier results in PIR sandwich panel with good lambda and planar surface, where no pinholes were observed. As it was expected, life time of pouring system is also free of fouling effect for around 8 hours. Thermal coefficient and surface quality of sandwich panels in composition of Example 6, where mixture of low molecular and high molecular weight emulsifier were applied, finally gave similar good results as in Example 2.

### PET polyester polyols composition

*emulsion stability, insulation properties, quality of the sandwich panel panel made from it* The observations described above for PA/DEG polyester (examples 1-6), where blend of high-and low-Mn OH monofunctional emulsifiers is applied, works also for PET/PA/DEG polyester (Examples 7-9).

**Example 7** it is comparative example for PET/PA/DEG polyester polyol where none of emulsifing agents was applied. The result is similar to Example 1, a non-stable emulsion with pentane is obtained, and it is not acceptable during foaming in high pressure machine for sandwich panel production. Quality of the surface is chracterized with huge amount of surface defects.

**Example 8** is performed according to the invention, and a huge improvement in the stability of the emulsion in laboratory test, for more than one month was observed. The same improvement was visible in quality of the surface, and lambda value for PIR core of the sandwich panel made from that polyester. No negative influence has been observed on pouring system life time (see Table 2).

**Example 9** is very similar to Example 8, with the difference that
i) glycerine was added to increase functionality of polyester and
ii) low-Mn trifunctional copolymer instead of monofunctional low-Mn copolymer was added.

A similar effect as in Example 6 was observed regarding emulsion stability, lambda value and processability. No negative influence on life time of pouring system was observed due to presence of monofuctional reactive emulsifier.

### PAIDEG polyester polyols composition

### effect of high-Mn reactive linear polyether polyol diol on processing window for continuous lamination production of sandwich panels made on high pressure machine

During proceeding of the experiments above it has been suprisingly found that presence of high-Mn monofunctional polyethers in the compostion of polyester polyol has positive influence on wider processing window in high pressure sandwich panel foaming machine. Namely, at least about 1 second broader delta could be applied, without influence on lambda and visual quality of the surface of the panel. The other physico-mechanical parameters of the PIR core were not changed. Taking into account the observation described above, and the limited amount of emulsifying agents in the polyester composition due to too high emulsion viscosity, the influence of non-emulsifying polyether diol on the processing window was checked. HMD was an example of non-emulsifying polyether polyol OH diol **Example 11** is a comparative polyester polyol with long and short emulsifying agent. Whereas in **Example 10** the same emulsifying agents are present as in Example 11, but with additional amount of non-emulsifying polyether polyol OH diol with high-Mn (20 wt%), which is HMD. Suprisingly, it was observed that the process for metal facing works well with delta from 2 to 5 seconds.

### Other examples

**Examples 12, 13 and 14** ilustrate a similarly good influence of the low- and high-MW monofunctional set of emulsifiers on the emulsion and properties of the sandwich panel surface. Examples 12 and 13 are polyesters based on recycled PET with some amount of isophtalic or tereftalic acid, whereas Example 14 represents polyester polyol based on majority with tereftalic acid without PET. These polyesters compositions form stable emulsion and good quality flat surface sandwich panel (see Table 2). No problems with poker blocking effect were observed. In the case of Example 14, higher delta was observed, what is positive characteristic due to procesability of polyester polyols in the production of sandwich panels.

**Example 15** is polyester polyol with another composition of acids characterized by presence of isophtalic acid and lack of PET. Emulsifier which was applied was low-Mn trifunctional and high-Mn monofunctional copolymer.

All the polyols from Examples 12-15 gave very good foam and sandwich panel characteristics and no blocking effect of pokers was observed.

### Raw materials:

- Rokester 2600 PET polyester polyol purchased from PCC Rokita SA
- LM is low-molecular weight OH monofunctional, nonylphenol-free copolymer EO/PO, purchased from PCC Rokita SA, Mn=863g/mol
- HM is high-Mn OH monofunctional, nonylphenol-free copolymer EO/PO. purchased from PCC Rokita SA, Mn=2672 g/mol
- HMD, is high-Mn diol, nonylphenol-free copolymer EO/PO, purchased from PCC Rokita SA
- HCO-40 is low-molecular OH ethoxylated hydrogenated castor oil surface active nonionic surfactants, purchased from Indo Amines Limited
- Roflam P- tris(2-chloroisopropyl)phosphate, purchased from PCC Rokita SA
- PET - Polyethylene terephthalate, purchased from Ergis - Recycling sp. Z o.o.
- PMDETA- N,N,N',N",N"-pentamethyldiethylenetriamine, selective blow catalyst, purchased from Evonik Industries AG
- Kosmos 75 LO- solution of potassium-2-ethyl hexanoate. Catalyst that promotes isocyanurate reaction. Purchased from Evonik Industries AG
- Tegostab B 84507- Polyethersiloxane, non-hydrolysable poly-siloxane-polyether-copolymer stabilizer, purchased from Evonik Industries AG
- Tegostab B 84504- Polyethersiloxane, non-hydrolysable poly-siloxane-polyether-copolymer stabilizer, purchased from Evonik Industries AG
- Ongronat 2500- Olygomeric methylene diphenyl diisocyanate, purchased from BorsodChem
- n-pentane- purchased from Brenntag Polska Sp. Z o.o.
- i-pentane- 2-methylbutane, purchased from Brenntag Polska Sp. Z o.o.
- c-pentane - cyclopentane, purchased from Brenntag Polska Sp. Z o.o.
- C/I pentane- cyclopentane, 2-methylbutane mix, purchased from Brenntag Polska Sp. Z o.o.
- TIPT- tetraisopropyl titanate, polyester polyol catalystpurchased from Sigma Aldrich
- TEP- triethyl phosphate, liquid flame retardant purchased from Impag AG
- TCPP - tris(1-chloro-2-propyl) phosphate
- DEG- diethylene glycol- purchased from Clariant
- MEG- monoethylene glycol, purchased from Sigma Aldrich
- Castor oil purchased from-
- TPA Benzene-1,4-dicarboxylic acid purchased from Orlen
- IPA Benzene-1,3-dicarboxylic acid purchased from- Prochema
- PA- phtalic anhydride purchased from- Sigma Aldrich
- AA - adipic acid, purchased from- Sigma Aldrich

### Methods:

**Hydroxyl value (OHv)** - the concentration of hydroxyl groups per unit weight of the polyester polyol. The hydroxyl value is given in mg KOH/g and is measured according to the standard PN-EN ISO 2554.

**Acid value (Av)** - the concentration of carboxylic groups per unit of the polyester polyol. The acid value is given in mg KOH/g and is measured according to the standard ISO 2114:2000.

**Viscosity at 25**°C- is measured according to the standard PN-EN ISO 3219.

**Water content-** is measured according to PN ISO 760, solvent: methanol+chloroform 1+3(V/V).

**Laboratory emulsification process** - the emulsion was made by mixing polyester polyol, hydrocarbon and air, after 30 sec of mixing with 200 rpm and than 2 minutes of mixing with propeller type mixer 2000 rpm in 500 ml cup, 170 g of polyester and 30 g of various pentanes.

**Emulsion stability test** - emulsion made by laboratory emulsification process, 150 g was placed in 200 ml sealed glass cylinder, at room temperature and the visual observation of separating layer of pentanes was proceeded; due to the presence of meniscus, the separation was detected when layer of pentane was above 1.5 mm.

## Claims

1. A polyol composition, comprising:
A. a polyester polyol with an aromatic polyester backbone, wherein the aromatic polyester polyol is an catalyst-mediated esterification reaction product at least of: a polyfunctional alcohol; an aromatic polycarboxylic acid component or polycarboxylic acid anhydride component or mixture thereof; and
B. a mixture of at least two polymers polyether polyols, having a block structure of alkoxy chain, preferably being a block copolymer of polyethylene oxide and polypropylene oxide, more preferably OH monofunctional block copolymer of polyethylene oxide and polypropylene oxide initiated with hydroxyl alcohol C12-C14 and C16-C18,
wherein a first polyether polyol has high number average molecular weight (high-Mn component) and a second polyether polyol has low number average molecular weight (low-Mn component) such that:
(i) mass ratio of high-Mn component to the mass of low-Mn component is from 0.2 to 5,
(ii) molecular weight ratio of high-Mn to low-Mn component is from 2 to 8; typical amount of such surfactants based on the combined weight of polyester and nonionic surfactants being preferably 5-20 wt%.

2. The polyol composition according to claim 1, wherein the poylester polyol has a hydroxyl value of 100 to 400 mg KOH/g and an average functionality of 1.0 to 3.0.

3. The polyol composition according to claim 1 or 2, wherein the polyfunctional alcohol is selected from the group comprising: ethylene glycol, diethyleneglycol, triethyleneglycol, polyethylene glycol, 1,2-propylene glycol, dipropylene glycol, trimethylene glycol, an isomer of butanediol, an isomer of pentanediol, an isomer of hexanediol, an isomer of heptanediol, an isomer of octanediol, an isomer of decandiol, an isomer of dodecandiol, an isomer of glycerol, an isomer of polyglycerol, an isomer of monomethylolpropane, an isomer of dimethylolpropane, an isomer of trimethylolpropane, an isomer of pentaerythritol and/or a combination thereof.

4. The polyol composition according to any one of claims 1-3, wherein the polycarboxylic acid or polycarboxylic acid anhydride are selected from the groups comprising:
- aromatics: phthalic acid; isophthalic acid; trimellitic acid; terephthalic acid; phthalic acid esters; phthalic acid anhydride; tetrahydrophthalic acid anhydride; pyromellitic dianhydride; tetrachlorophthalic acid anhydride; tetrabromophtalic acid anhydride; residues from the manufacture of phthalic acid or phthalic anhydride, residues from the manufacture of terephthalic acid, or a combination thereof;
- aliphatics: maleic acid, fumaric acid, maleic anhydride, oxalic acid, malonic acid, succinic acid, glutaric acid, glutaric acid anhydride, adipic acid, pimelic acid, suberic acid, azelaic acid, sebacic acid, or a combination thereof.

5. The polyol composition according to any one of claims 1-4, wherein the catalyst(s) are selected from the group comprising: tetraisopropyl titanate, tetrabutyl titanate salts, stannous octoate, stannous oleate, stannous acetate, stannous laurate, dibutyl tin dilaurate, sodium and potassium acetate, or a combination thereof.

6. The polyol composition according to any one of claims 1-5, wherein the molecular weight of the high-Mn polyether polyol is below 10 000 g/mol, preferably in the range from 2000 g/mol to 5000 g/mol.

7. The polyol composition according to any one of claims 1-6, wherein the molecular weight of the low-Mn polyether polyol is below 2000 g/mol, preferably below 1000 g/mol, and above 350 g/mol.

8. The polyol composition according to any one of claims 1-7, wherein an additional third polyether polyol can be optionally applied, preferably with Mn >2000 g/mol, more preferably diol or triol random copolymer EO/PO.

9. The polyol composition according to any one of claims 1-8, wherein composition optionally comprises further an oil selected from the group comprising: oil from or derived from rapeseed, soya, coconut, sunflower, palm, tallow, tall oil fatty acid, or a combination thereof.

10. The polyol composition according to any one of claims 1-9, wherein the polyester polyol comprises polyester additive(s) selected from the group comprising: virgin polyethylene terephthalate), recycled polyethylene terephthalate), glycol-modified polyethylene terephthalate), poly(butylene terephthalate), poly(trimethylene terephthalate), or a combination thereof.

11. The polyol composition according to any one of claims 1-10, wherein the composition optionally comprises flame retardants selected from the group of phosphorus-containing compounds, preferably diethyl ethanephosphonate, dimethyl propylphosphonate, triethyl phosphate, diphenyl cresyl phosphate, tris(2-chlorisopropyl)phosphate (TCPP), triphenyl phosphate, aryl phosphate and/or ammonium phosphate.

12. An isocyanate-reactive composition comprising at least:
a) the polyol composition as defined in claims 1-11
b) a catalyst
c) a blowing agent
d) a silicon stabilizer
e) a flame retardant

13. The isocyanate-reactive composition according to claim 12, wherein the blowing agent is selected from the group comprising:
- physical blowing agents: n-pentane, i-pentane, c-pentane or its mixtures, hydrofluoroolefins (HFOs) or its mixtures,
- chemical blowing agents: water, formic acid, lactic acid.

14. The isocyanate-reactive composition according to claim 12 or 13, wherein the catalyst is a trimerization catalyst, preferrably potassium octoate or potassium acetate.

15. A process for producing rigid foam, comprising mixing an organic isocyanate with the isocyanate-reactive composition according to any one of claims 12-14 at an isocyanate index above 230 to form a reaction mixture.

16. The process according to claim 15, wherein the process takes place in a continuous production line.

17. The process according to claim 15 or 16, wherein the reaction mixture is poured into a cavity of a mold of a desired part, wherein the cavity is lined with a facer.

18. A metal-faced panel obtained by the process as described in any one of claims 15-17, with thickness from 60 mm to 2000 mm, core density from 33 to 42 kg/m3, reaction to fire equal B-s1,d0, fire resistance equal to at least EI30, lambda below 0.022 W/mK, according to harmonized standard EN 14509:2013.
